# EUROPEAN PATENT SPECIFICATION

(11) **EP 4 141 646 B1**
(45) Date of publication and mention of the grant of the patent: **13.03.2024**
(21) Application number: 22190514.4
(22) Date of filing: 16.08.2022
(51) Int. Cl.: G06F 7/483, G06F 7/544

(54) **METHOD AND APPARATUS WITH CALCULATION**
VERFAHREN UND GERÄT MIT BERECHNUNG
PROCÉDÉ ET APPAREIL AVEC CALCUL

(30) Priority: 23.08.2021 KR 20210111118
(43) Date of publication of application: 01.03.2023
(73) Proprietor: Samsung Electronics Co., Ltd., Gyeonggi-do, 16677 (KR)
(72) Inventor: Kim, Dongyoung, Suwon-si, Gyeonggi-do (KR)
(74) Representative: Grünecker Patent- und Rechtsanwälte PartG mbB

(56) References cited:
- US-A1- 2011 099 295
- THIERRY TAMBE ET AL: "AdaptivFloat: A Floating-point based Data Type for Resilient Deep Learning Inference", ARXIV.ORG, CORNELL UNIVERSITY LIBRARY, 201 OLIN LIBRARY CORNELL UNIVERSITY ITHACA, NY 14853, 29 September 2019 (2019-09-29), XP081594937,

## Description

### BACKGROUND

### 1. Field

The following description relates to a method and apparatus with calculation.

### 2. Description of Related Art

An artificial neural network may be implemented by referring to a computational architecture. Various types of electronic systems may analyze input data and extract valid information using an artificial neural network. An apparatus to process the artificial neural network may require a large amount of computation for complex input data. Such technology may not be capable of effectively processing an operation related to an artificial neural network to extract desired information by analyzing a large amount input data using the artificial neural network. The publication of Tambe Thierry, et al. "AdaptivFloat: A Floating-point based Data Type for Resilient Deep Learning Inference", ARXIV.org, Cornell University Library, 201 Olin Library Cornell University Ithaca, NY 14853, 29 September 2019 (2019-09-29) relates to a floating-point based data type for resilient deep learning inference. Conventional hardware-friendly quantization methods, such as fixed-point or integer, are described to tend to perform poorly at very low word sizes as their shrinking dynamic ranges cannot adequately capture the wide data distributions commonly seen in sequence transduction models. The document presents AdaptivFloat, a floating-point inspired number representation format for deep learning that dynamically maximizes and optimally clips its available dynamic range, at a layer granularity, in order to create faithful encoding of neural network parameters. AdaptivFloat consistently produces higher inference accuracies compared to block floating-point, uniform, IEEE-like float or posit encodings at very low precision (< 8-bit) across a diverse set of state-of-the-art neural network topologies. And notably, AdaptivFloat is seen surpassing baseline FP32 performance by up to +0.3 in BLEU score and -0.75 in word error rate at weight bit widths that are < 8-bit. Experimental results on a deep neural network (DNN) hardware accelerator, exploiting AdaptivFloat logic in its computational datapath, demonstrate per-operation energy and area that is 0.9 x and 1.14 x, respectively, that of equivalent bit width integer-based accelerator variants.

### SUMMARY

This Summary is provided to introduce a selection of concepts in a simplified form that are further described below in the Detailed Description.

The invention is claimed in the independent claims. Preferred embodiments are specified in the dependent claims.

According to the present invention, there is provided a processor-implemented method including receiving a plurality of pieces of input data expressed as floating point; adjusting a bit-width of mantissa by performing masking on the mantissa of each piece of the input data based on a size of an exponent of each piece of the input data for each piece of the input data, the adjusting of the bit-width of the mantissa includes comparing the piece of the input data to a threshold and adjusting the bit-width of mantissa based on a result of the comparing, wherein the threshold is determined based on a distribution of the input data and an allowable error range; and performing an operation between the input data with the adjusted bit-width, wherein for each piece of the input data, the adjusting of the bit-width of the mantissa includes adjusting the bit-width of the mantissa in proportion to the size of the piece of the input data.

The method may include: receiving a distribution of the plurality of pieces of input data; and determining a threshold corresponding to each of the plurality of pieces of input data based on the distribution of the plurality of pieces of input data.

The performing of the operation may include controlling a position and a timing of an operator to which the input data with the adjusted bit-width is input.

The performing of the operation may include: determining a number of cycles of the operation performed by a preset number of operators based on the adjusted bit-width of each piece of the input data; and inputting the input data with the adjusted bit-width to the operator based on the determined number of cycles.

The determining of the number of cycles of the operation may include determining the number of cycles of the operation based on the adjusted bit-width of the mantissa of each piece of the input data and a number of bits processible by the operator in a single cycle.

The operator may include: a multiplier configured to perform an integer multiplication of the mantissa of the input data; a shifter configured to shift a result of the multiplier; and an accumulator configured to accumulate the shifted result.

The performing of the operation may include: determining a number of operators for performing the operation within a preset number of cycles of the operation based on the adjusted bit-width of the mantissa of each piece of the input data; and inputting the input data with the adjusted bit-width to the operator based on the determined number of operators.

The determining of the number of operators may include determining the number of operators based on the adjusted bit-width of the mantissa of each piece of the input data and a number of bits processible by the operator in a single cycle.

According to the present invention, there is further provided an apparatus, comprising a central processing device configured to receive a distribution of a plurality of pieces of input data expressed as floating point, and determine a threshold corresponding to each of the plurality of pieces of input data based on the distribution of the plurality of pieces of input data, wherein the threshold is determined based on a distribution of the input data and an allowable error range; and a hardware accelerator configured to receive the plurality of pieces of input data, adjust a bit-width of mantissa by performing masking on the mantissa of each piece of the input data based on a size of exponent of each piece of the input data, wherein, for each piece of the input data, the hardware accelerator is further configured to adjust the bit-width of the mantissa by comparing the piece of the input data to the threshold, and adjusting the bit-width of mantissa based on a result of the comparing; and perform an operation between the input data with the adjusted bit-width, wherein the hardware accelerator is further configured to, for each piece of the input data, adjust the bit-width of the mantissa by adjusting the bit-width of the mantissa in proportion to the size of the piece of the input data.

According to the present invention, there is yet further provided a non-transitory computer readable storage medium storing instructions that, when executed by one or more processors , configure the one or more processors to perform the steps of receiving a plurality of pieces of input data expressed as floating point, adjusting a bit-width of a mantissa by performing masking on the mantissa of each piece of the input data based on a size of an exponent of each piece of the input data by comparing the piece of the input data to a threshold, and adjusting the bit-width of mantissa based on a result of the comparing, wherein the threshold is determined based on a distribution of the input data and an allowable error range; and performing an operation on the input data with the adjusted bit-width, wherein the adjusting of the bit-width of the mantissa comprises, for each piece of input data, adjusting the bit-width of the mantissa in proportion to the size of the piece of the input data.

For the performing of the operation, the one or more processors may be configured to control a position and a timing of an operator to which the input data with the adjusted bit-width is input.

For the performing of the operation, the one or more processors may be configured to: determine a number of cycles of the operation performed by a preset number of operators based on the adjusted bit-width of the mantissa of each piece of the input data; and input the input data with the adjusted bit-width to the operator based on the determined number of cycles.

For the determining of the number of cycles of the operation, the one or more processors may be configured to determine the number of cycles of the operation based on the adjusted bit-width of the mantissa of each piece of the input data and a number of bits processible by the operator in a single cycle.

The operator may include: a multiplier configured to perform an integer multiplication of the mantissa of the input data; a shifter configured to shift a result of the multiplier; and an accumulator configured to accumulate the shifted result.

For the performing of the operation, the one or more processors may be configured to: determine a number of operators for performing the operation within a preset number of cycles of the operation based on the adjusted bit-width of the mantissa of each piece of the input data; and input the input data with the adjusted bit-width to the operator based on the determined number of operators.

For the determining of the number of operators, the one or more processors may be configured to determine the number of operators based on the adjusted bit-width of the mantissa of each piece of the input data and a number of bits processible by the operator in a single cycle.

The adjusting of the bit-width of the mantissa may include allocating a smaller bit-width to the mantissa in response to the exponent being less than the threshold than in response to the exponent being greater than or equal to the threshold.

The performing of the operation may include using an operator, and the adjusted bit-width of the mantissa may be less than or equal to a number of bits processible by the operator in a single cycle.

The adjusting of the bit-width of the mantissa may include maintaining the bit-width of the mantissa in response to the exponent being greater than or equal to the threshold.

The threshold may include a plurality of threshold ranges each corresponding to a respective bit-width, and the adjusting of the bit-width of the mantissa may include adjusting, in response to the input data corresponding to one of the threshold ranges, the bit-width of the mantissa to be the bit-width corresponding to the one of the threshold ranges.

The performing of the operation may include performing a multiply and accumulate operation using an operator.

In another general aspect, a processor-implemented method includes: receiving floating point weight data and floating point feature map data of a layer of a neural network; adjusting a mantissa bit-width of the weight data and a mantissa bit-width of the feature map data by respectively comparing a size of an exponent of the weight data to a threshold and a size of an exponent of the feature map data to another threshold; and performing a neural network operation between the floating point weight data and the floating point feature map data with the adjusted bit-widths.

Other features and aspects will be apparent from the following detailed description, the drawings, and the claims.

### BRIEF DESCRIPTION OF THE DRAWINGS

FIG. 1A illustrates an example of describing a deep learning operation method using an artificial neural network.
FIG. 1B illustrates an example of describing a filter and data of an input feature map provided as an input in a deep learning operation.
FIG. 1C illustrates an example of describing a process of performing a convolution operation based on deep learning.
FIG. 2 is a diagram illustrating an example of a neural network apparatus.
FIG. 3 is a flowchart illustrates an example of a calculation method.
FIG. 4 illustrates an example of describing a method of effectively operating a dynamic floating point number.
FIG. 5 illustrates an example of describing a method of adjusting a bit-width of mantissa using a threshold.
FIG. 6 illustrates an example of describing a method of performing a mantissa multiplication operation of a dynamic floating point number by dynamically adjusting a number of operation cycles using a fixed number of operators.
FIG. 7 illustrates an example of performing a mantissa multiplication operation of a dynamic floating point number by dynamically adjusting a number of operation cycles using a fixed number of operators.
FIG. 8 is a diagram illustrating an example of a calculation apparatus.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art, after an understanding of the disclosure of this application, may be omitted for increased clarity and conciseness.

Although terms of "first," "second," and the like are used to explain various members, components, regions, layers, or sections, these members, components, regions, layers, or sections are not limited to such terms. Rather, these terms are used only to distinguish one member, component, region, layer, or section from another member, component, region, layer, or section. For example, a first member, component, region, layer, or section referred to in examples described herein may also be referred to as a second member, component, region, layer, or section without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween. Likewise, expressions, for example, "between" and "immediately between" and "adjacent to" and "immediately adjacent to" may also be construed as described in the foregoing.

The terminology used herein is for the purpose of describing particular examples only and is not to be limiting of the present disclosure. As used herein, the singular forms "a", "an", and "the" are intended to include the plural forms as well, unless the context clearly indicates otherwise. As used herein, the term "and/or" includes any one and any combination of any two or more of the associated listed items. As used herein, the terms "include," "comprise," and "have" specify the presence of stated features, integers, steps, operations, elements, components, numbers, and/or combinations thereof, but do not preclude the presence or addition of one or more other features, integers, steps, operations, elements, components, numbers, and/or combinations thereof. The use of the term "may" herein with respect to an example or embodiment (for example, as to what an example or embodiment may include or implement) means that at least one example or embodiment exists where such a feature is included or implemented, while all examples are not limited thereto.

Unless otherwise defined herein, all terms used herein including technical or scientific terms have the same meanings as those generally understood by one of ordinary skill in the art to which this disclosure pertains after and understanding of the present disclosure. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

The examples may be implemented in various types of products, for example, a data center, a server, a personal computer, a laptop computer, a tablet computer, a smartphone, a television, a smart home appliance, a smart vehicle, a kiosk, and a wearable device. Hereinafter, the examples are described with reference to the accompanying drawings. Like reference numerals illustrated in the respective drawings refer to like elements.

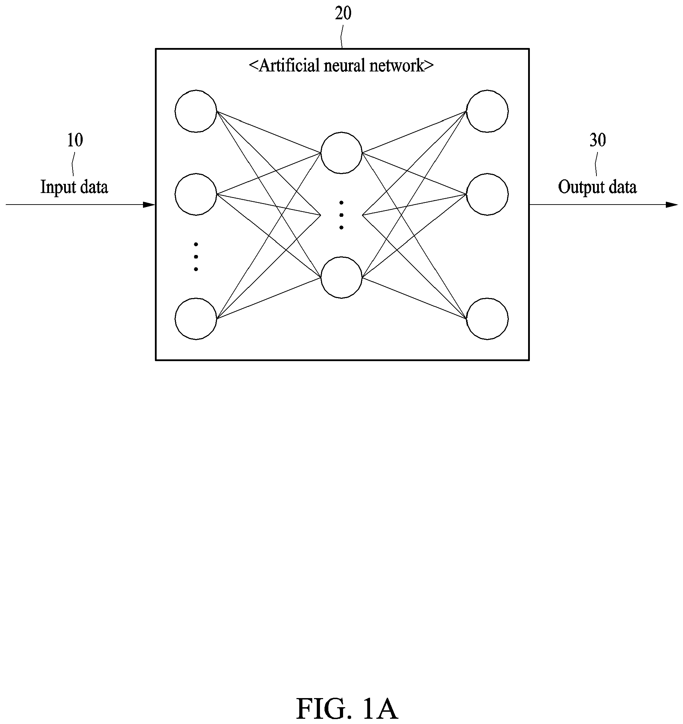

FIG. 1A illustrates an example of describing a deep learning operation method using an artificial neural network.

An artificial intelligence (Al) algorithm including deep learning, etc., may input input data 10 to an artificial neural network (ANN), may learn output data 30 through an operation such as convolution, and may extract a feature using the trained artificial neural network. In the artificial neural network, nodes are interconnected and collectively operate to process the input data 10. Various types of neural networks include, for example, a convolutional neural network (CNN), a recurrent neural network (RNN), a deep belief neural (DBN), and a restricted Boltzmann machine (RBM) scheme. However, they are provided as examples only. In a feed-forward neural network, nodes of the neural network have links with other nodes. The links may extend in a single direction, for example, a forward direction through the neural network. While the neural network may be referred to as an "artificial" neural network, such reference is not intended to impart any relatedness with respect to how the neural network computationally maps or thereby intuitively recognizes information and how a human brain operates. I.e., the term "artificial neural network" is merely a term of art referring to the hardware-implemented neural network.

FIG. 1A illustrates a structure of the artificial neural network, for example, a CNN 20, which may receive the input data 10 and output the output data 130. The artificial neural network may be a deep neural network having two or more layers.

The CNN 20 may be used to extract "features", such as a border and a line color, from the input data 10. The CNN 20 may include a plurality of layers. Each layer may receive data and may process data that is input to a corresponding layer and generate data that is output from the corresponding layer. Data that is output from a layer may be a feature map that is generated through a convolution operation between an image or a feature map input to the CNN 20 and a filter weight. Initial layers of the CNN 20 may operate to extract low level features, such as edges and gradients, from input. Subsequent layers of the CNN 20 may gradually extract more complex features, such as eyes and nose, in the image.

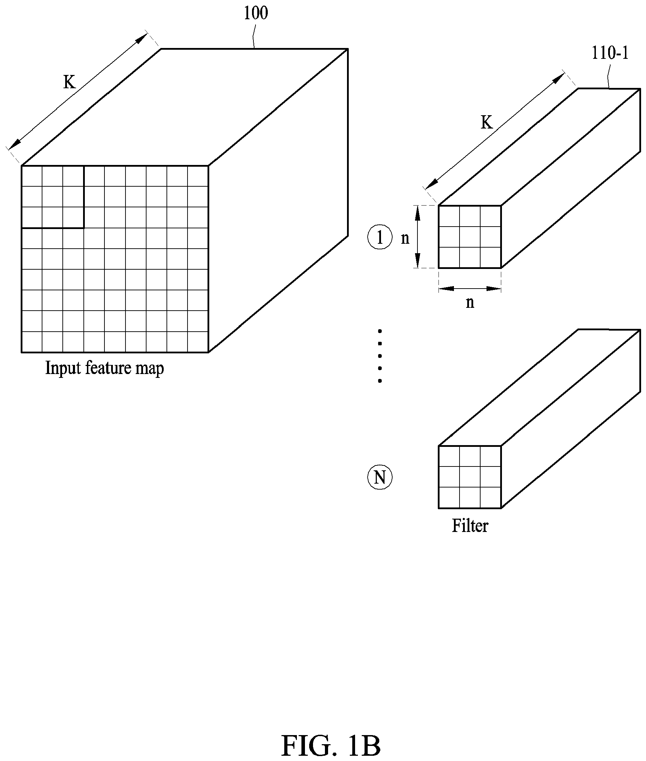

FIG. 1B illustrates an example of describing a filter and data of an input feature map provided as an input in a deep learning operation.

Referring to FIG. 1B, an input feature map 100 may be a set of pixel values or numerical data of an image input to an artificial neural network. However, it is provided as an example only. In FIG. 1B, the input feature map 100 may refer to a pixel value of an image to be learned or recognized through the artificial neural network. For example, the input feature map 100 may have 256×256 pixels and K depth.

A number of filters 110-1 to 110-N may be N. Each of the filters 110-1 to 110-N may include n-by-n (n×n) weights. For example, each of the filters 110-1 to 110-N may have 3x3 pixels and a depth value of K.

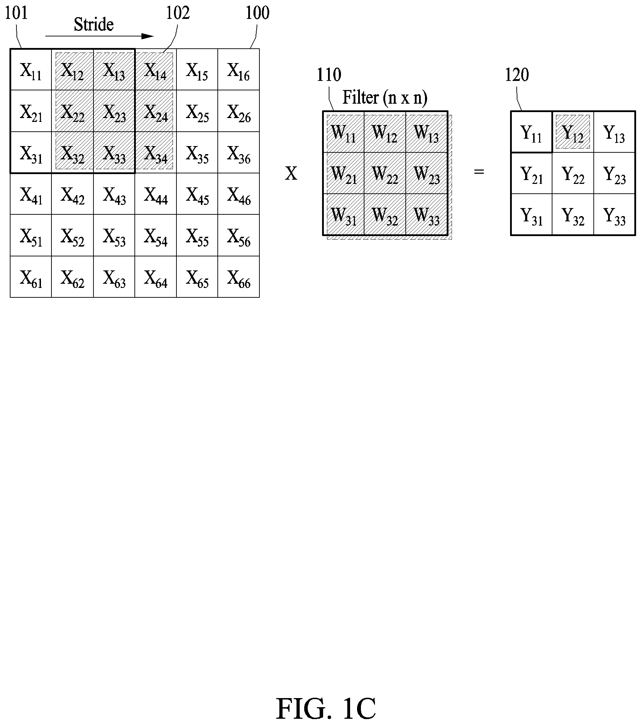

FIG. 1C illustrates an example of describing a process of performing a convolution operation based on deep learning.

Referring to FIG. 1C, a process of performing a convolution operation in an artificial neural network may refer to a process of generating an output feature map 120 by generating an output value through multiplication and addition operations with the input feature map 100 and a filter 110 in each layer and by cumulatively adding up output values.

The process of performing the convolution operation may refer to a process of performing multiplication and addition operations by applying the filter 100 with a desired scale, for example, a size of nxn from an upper left end to a lower right end of the input feature map 100 in a current layer. Hereinafter, an example process of performing a convolution operation on the filter 110 with a size of 3x3 is described.

For example, 3x3 data in a first area 101 at the upper left end of the input feature map 100 (that is, a total of nine data X₁₁ to X₃₃ including three data in a first direction and three data in a second direction) and weights W₁₁ to W₃₃ of the filter 110 may be multiplied, respectively. By accumulating and summing all output values of the multiplication operation (that is, X₁₁*W₁₁, X₁₂*W₁₂, X₁₃*W₁₃, X₂₁*W₂₁, X₂₂*W₂₂, X₂₃*W₂₃, X₃₁*W₃₁, X₃₂*W₃₂, and X₃₃*W₃₃), (1-1)-th output data Y₁₁ of the output feature map 120 may be generated.

A subsequent operation may be performed by shifting from the first area 101 to a second area 102 of the input feature map 100 by a unit of data. Here, in a convolution operation process, a number of data that shifts in the input feature map 100 may be referred to as a stride and a scale of the output feature map 120 to be generated may be determined based on a scale of the stride. For example, when stride = 1, a total of nine input data X₁₂ to X₃₄ included in the second area 102 and weights W₁₁ to W₃₃ are multiplied, respectively, and (1-2)-th output data Y₁₂ of the output feature map 120 may be generated by accumulating and summing all the output values of the multiplication operation (that is, X₁₂*W₁₁, X₁₃*W₁₂, X₁₄*W₁₃, X₂₂*W₂₁, X₂₃*W₂₂, X₂₄*W₂₃, X₃₂*W₃₁, X₃₃*W₃₂, and X₃₄*W₃₃).

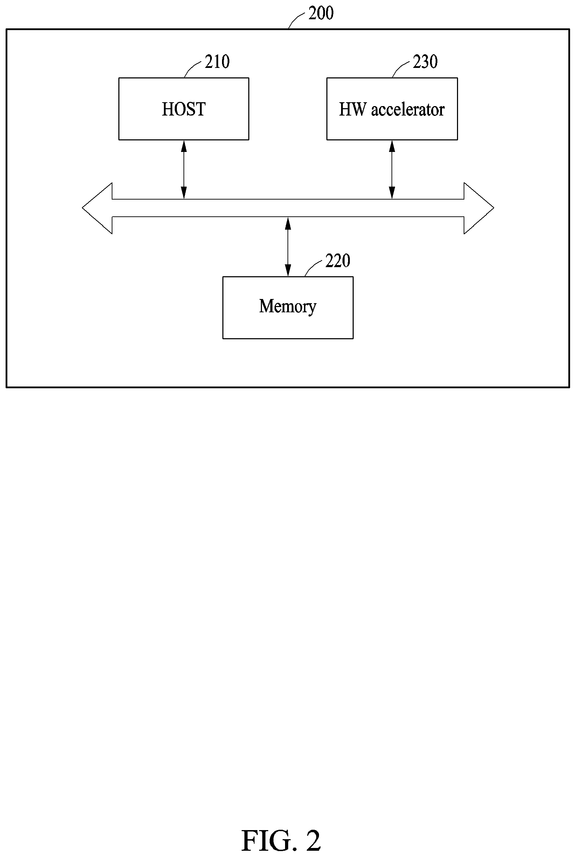

FIG. 2 is a diagram illustrating an example of a neural network apparatus.

Referring to FIG. 2, a neural network apparatus 200 may include a host 210 (e.g., one or more processors), a memory 220 (e.g., one or more memories), and a hardware (HW) accelerator 230 (e.g., one or more HW accelerators). The neural network apparatus 200 of FIG. 2 includes components related to examples. Therefore, it will be apparent after an understanding of the present disclosure that the neural network apparatus 200 may further include other generalpurpose components in addition to the components of FIG. 2.

The host 210 may perform the overall functionality of controlling the neural network apparatus 200. The host 210 may overall control the neural network apparatus 200 by running programs stored in the memory 220 included in the neural network apparatus 200. The host 210 may be or include a central processing unit (CPU), a graphics processing unit (GPU), an application processor (AP), etc., provided in the neural network apparatus 200, however, is not limited thereto.

The host 210 may output an operation result regarding to a class to which input data corresponds among classes using a neural network trained for classification. In detail, the neural network for classification may output an operation result for a probability that input data corresponds to each of the classes as a result value for each corresponding class. Also, the neural network for classification may include a softmax layer and a loss layer. The softmax layer may convert the result value for each of the classes to a probability value and the loss layer may calculate a loss as an objective function for learning of the neural network.

The memory 220 may be hardware configured to store data that is processed and data to be processed in the neural network apparatus 200. Also, the memory 220 may store an application and a driver to be run by the neural network apparatus 200. The memory 220 may include a volatile memory, such as a dynamic random access memory (DRAM) or a nonvolatile memory.

The neural network apparatus 200 may include the hardware accelerator 230 for driving the neural network. The hardware accelerator 230 may correspond to, for example, a neural processing unit (NPU), a tensor processing unit (TPU), and a neural engine, which are dedicated modules for driving the neural network.

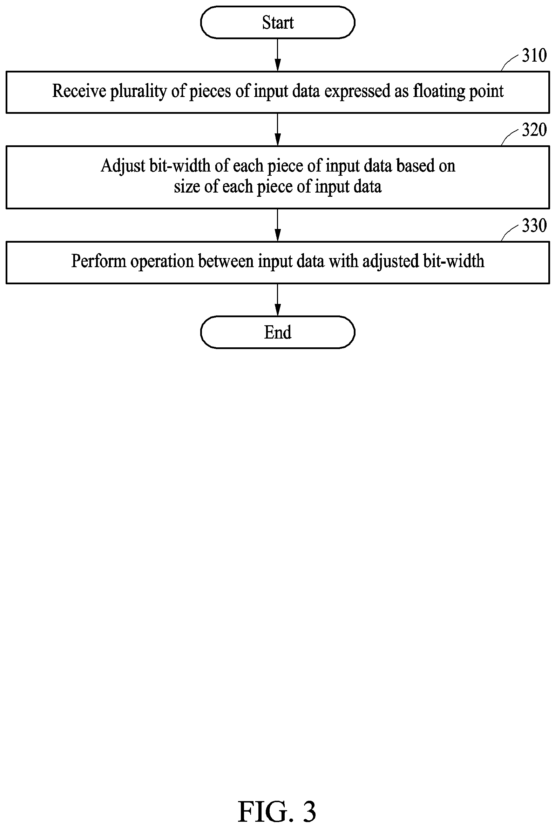

FIG. 3 is a flowchart illustrating a calculation method according to the present invention.

Operations of FIG. 3 may be performed in the illustrated order and manner. Order of some operations may be changed or some operations may be omitted without departing from the scope of the examples. The operations of FIG. 3 may be performed in parallel or simultaneously. Blocks of FIG. 3 and combinations of the blocks may be implemented by a special-purpose hardwarebased computer that performs a specific function or a combination of special purpose hardware and computer instructions.

A typical calculation apparatus performing a deep learning operation may process iterative multiplication and addition operations for many layers and may perform a large amount of computation accordingly. In contrast, a calculation apparatus of one or more embodiments may reduce an amount of deep learning computation by converting data expressed as floating point, non-limiting examples of which will be described below.

In operation 310, a hardware accelerator receives a plurality of pieces of input data expressed as floating point. The hardware accelerator may also be referred to as the calculation apparatus. In another example, a neural network apparatus (e.g., the neural network apparatus 200) may also be referred to as the calculation apparatus, and may include the hardware accelerator. The input data may include weight and input feature map data described above with reference to FIGS. 1A to 1C.

Prior to describing an example of the calculation method, a method of expressing data as floating point is described. The floating point refers to arithmetic using formulaic representation of real numbers as an approximation and is represented with a mantissa that expresses a significand, without fixing a position of decimal point, and exponent that expresses a position of decimal point. For example, if 263.3 expressed in a decimal system is expressed in a binary system, it is 100000111.0100110..., which may be expressed as 1.0000011101*28. In addition, if it is expressed as 16-bit floating point, a bit (1 bit) of sign includes 0 (positive number), bits (5 bits) of exponent include 11000 8+16 (bias), and mantissa bits include 0000011101 (10 bits), which may be finally expressed as 0110000000011101.

In operation 320, the hardware accelerator adjusts a bit-width of mantissa based on a size of each piece of the input data. The hardware accelerator of one or more embodiments may reduce a bit-width required for multiplication and addition operations between input data expressed as floating point by dynamically setting a bit-width of mantissa of a floating point to be different based on a size of the corresponding input data during a deep learning operation, which may lead to minimizing a loss of accuracy and reducing computational complexity. An expression scheme of input data adjusted according to the method disclosed herein may be referred to as a dynamic floating point number.

As described above, the deep learning operation may use iterative multiplication and addition operations for many layers. Therefore, quantization schemes of one or more embodiments and the hardware accelerator of one or more embodiments to support the same are described herein to process many operations with low cost and high efficiency. A quantization scheme may refer to a method of increasing a computation speed by lowering precision of an artificial neural network parameter and may be, for example, a method of converting 32-bit floating point data to 8-bit integer data.

However, while quantization of data may increase a computation speed, quantization of data may also decrease a computation accuracy. Therefore, a typical hardware accelerator may perform a re-training process to maintain the computation accuracy. Also, in the case of performing an operation in real time, every time an operation with a large quantization error such as batch normalization is performed, the typical hardware accelerator may perform a de-quantization and quantization process of performing de-quantization of, for example, converting 8-bit integer data to 32-bit floating-point data and then performing an operation using data expressed as floating point and performing again quantization to reduce the computational complexity of a subsequent operation. Therefore, the typical hardware accelerator may only obtain a limited gain. In contrast, the hardware accelerator of one or more embodiments may reduce both a loss of accuracy and an amount of computation.

Since the overall computational accuracy may decrease as a large size of data is approximated, the hardware accelerator of one or more embodiments may simultaneously reduce a loss of accuracy and an amount of computation through a method of allocating a bit-width of mantissa in proportion to a size of data.

In one example, the hardware accelerator of one or more embodiments may adjust a bit-width of mantissa using only the exponent without using the entire input data. For example, the hardware accelerator may adjust a bit-width of the mantissa in proportion to a size of the exponent. This scheme is advantageous in terms of an access speed and a computation speed compared to typically using the entire input data. Also, since the exponent expresses a location of the decimal point, the size of the exponent has an absolute influence on a size of input data. Therefore, adjusting the bit-width of the mantissa using the size of the exponent does not greatly degrade the entire accuracy of computation. The smaller the size of the exponent of the input data, the smaller the influence of the mantissa of the input data on the accuracy of the overall operation. The hardware accelerator of one or more embodiments may thus simultaneously decrease the loss of accuracy and the computational complexity.

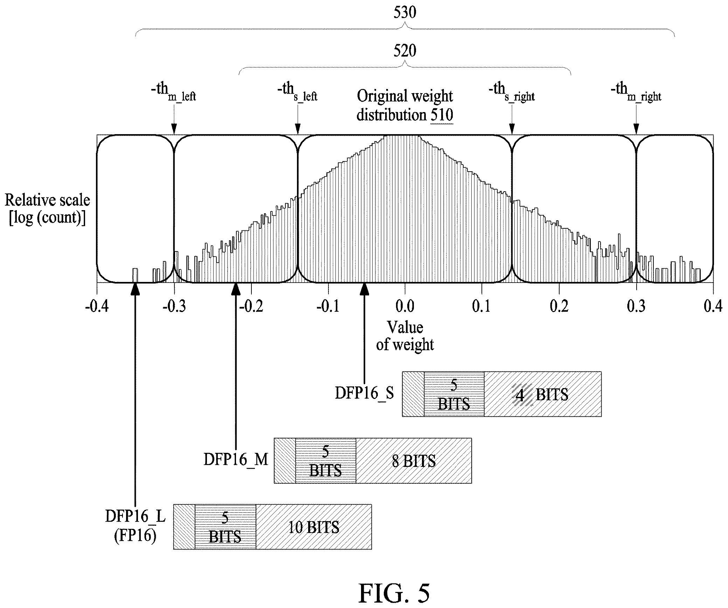

In detail, the hardware accelerator may compare the exponent of input data to a threshold using a comparator and may allocate a larger bit-width to mantissa of input data with a large exponent (e.g., with an exponent greater than or equal to the threshold) and allocate a smaller bit-width to mantissa of input data with a smaller exponent (e.g., with an exponent less than the threshold). A non-limiting example of a method of adjusting a bit-width of mantissa based on a threshold is described with reference to FIG. 5.

In operation 330, the hardware accelerator performs an operation between the input data with the adjusted bit-width. The hardware accelerator may perform multiplication and addition operations between input data with the adjusted bit-width. For example, the hardware accelerator may perform multiplication and addition operations between a weight with an adjusted bit-width and an input feature map with an adjusted bit-width.

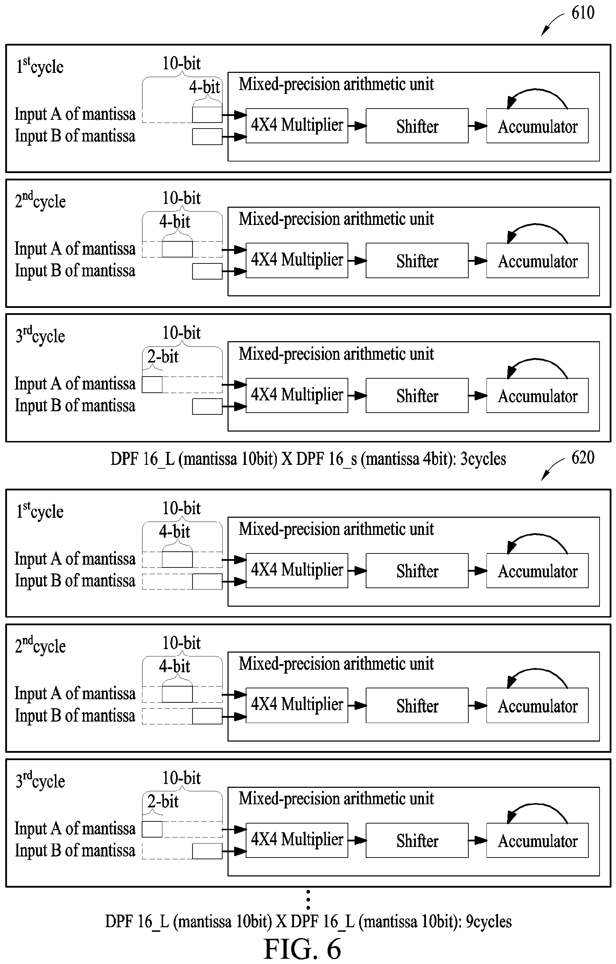

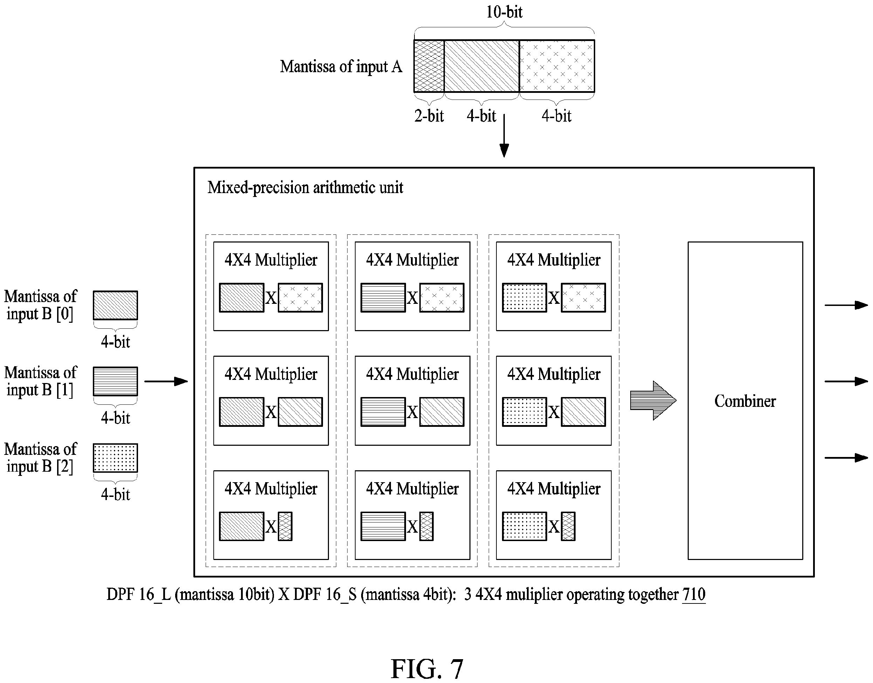

The hardware accelerator may perform a multiplication operation through a normalization after multiplication between exponents of the respective input data and between mantissas of the respective input data. Here, the multiplication between exponents may refer to multiplication between exponents with the same base and thus, may be identical to performing an addition. The multiplication between mantissas may be performed in the same manner as an integer multiplication. A non-limiting example of a calculation method between input data with the adjusted bit-width is described with reference to FIGS. 6 and 7.

The hardware accelerator may repeat operations 310 to 330 for each layer. The hardware accelerator may receive input data that is input to a corresponding layer for each layer, may adjust a bit-width of mantissa of each piece of the input data, and may perform an operation between input data with the adjusted bit-width. In addition, a threshold to be compared to an exponent of input data may be determined for each layer.

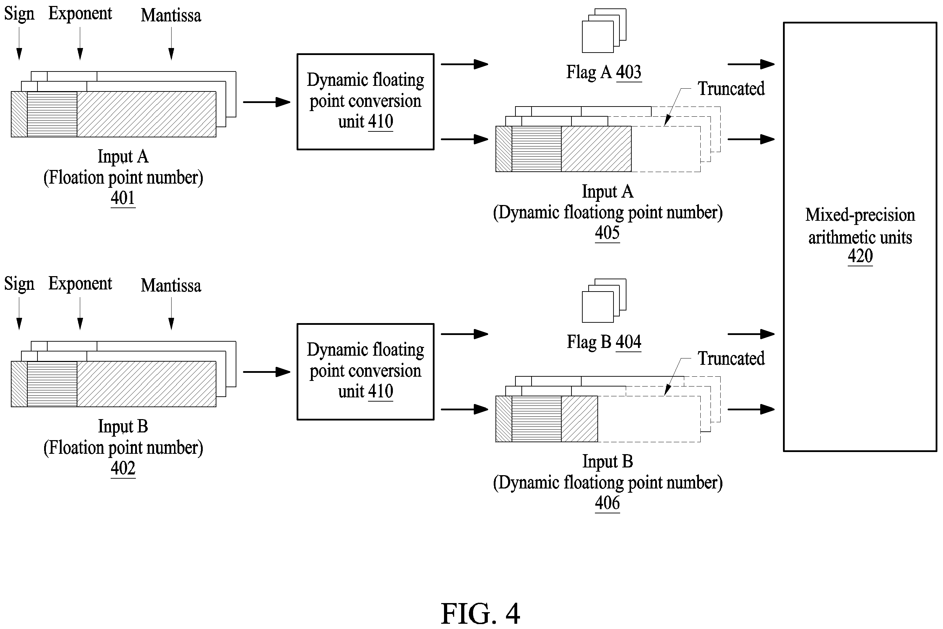

FIG. 4 illustrates an example of describing a method of effectively operating a dynamic floating point number.

Referring to FIG. 4, a hardware accelerator may include a dynamic floating point conversion module 410 and a mixed precision arithmetic module 420.

The hardware accelerator may receive a first input 401 and a second input 402 expressed as floating point. For example, the first input 401 may be a weight and the second input 402 may be an input feature map. Alternatively, the first input 401 may be an input feature map and the second input 402 may be a weight.

The dynamic floating point conversion module 410 of the hardware accelerator may adjust a bit-width of the mantissa of each of the first input 401 and the second input 402 based on an exponent size of each of the first input 401 and the second input 402. That is, the dynamic floating point conversion module 410 may convert each of the first input 401 and the second input 402 expressed as floating point to a dynamic floating point number with a smaller bit-width of the mantissa.

The dynamic floating point conversion module 410 may include a comparator, and may compare an exponent of input data to a threshold using the comparator and may allocate a larger bit-width to mantissa of input data with a large exponent (e.g., with an exponent greater than or equal to the threshold) and may allocate a smaller bit-width to mantissa of input data with a small exponent (e.g., with an exponent less than the threshold. By performing threshold comparison using only the exponent rather than the entire input data, the dynamic floating point conversion module 410 of one or more embodiments may convert data expressed as floating point with low cost and without a loss of accuracy.

The dynamic floating point conversion module 410 may output information about the bit-width allocated to the mantissa of input data with input data of which the bit-width is adjusted. For example, the dynamic floating point conversion module 410 may output information 403 about the bit-width of the first input 401 and information 404 about the bit-width of the second input 402 respectively with first input data 405 and the second input data 406 expressed as dynamic floating point numbers.

The mixed precision arithmetic module 420 of the hardware accelerator may perform an operation between the first input data 405 and the second input data 406 expressed as the dynamic floating point numbers. The mixed precision arithmetic module 420 may include an operator that performs a multiply and accumulate (MAC) operation.

The hardware accelerator may control timings at which the first input data 405 and the second input data 406 are input to the mixed precision arithmetic module 420, a number of cycles of the operation performed by the mixed precision arithmetic module 420, and a number of operating operators based on the information 403 about the bit-width of the first input 401 and the information 404 about the bit-width of the second input 402.

The mixed precision arithmetic module 420 may support a mixed precision arithmetic using a spatial fusion method and/or a temporal function method and may obtain a higher throughput when the bit-width of mantissa is reduced. As a result, through the reduction of the bit-width of the mantissa, the hardware accelerator of one or more embodiments may improve a hardware computation speed and power consumption compared to the typical floating point arithmetic or the typical hardware accelerator. A non-limiting example of further description related to the spatial function method and the temporal fusion method are made with reference to FIGS. 6 and 7.

FIG. 5 illustrates an example of describing a method of adjusting a bit-width of a mantissa using a threshold.

A neural network apparatus according to an example may receive a distribution of input data for each layer and may determine a threshold corresponding to input data of each layer. For example, referring to FIG. 5, the neural network apparatus may determine four thresholds *th*_{*m*_}*_{left}, th_{s_teft}, th_{s_right},* and *th_{m_right}* corresponding to input data of a corresponding layer. The neural network apparatus may be the neural network apparatus 200 of FIG. 2.

In FIG. 5, the thresholds *th_{m_left}* and *th_{m_right}* and the thresholds *th_{s_left}* and *th_{s_right}* may have a symmetric relationship with the same size but different signs (e.g., the thresholds *th_{m_left}* and *th_{m_right}* may have a same size but different signs, and the thresholds *th_{s_left}* and *th_{s_right}* may have a same size but different signs). However, depending on examples, the thresholds may not have such symmetric relationship. Also, although FIG. 5 illustrates four thresholds as an example, it is provided as an example only and a number of thresholds may be variously applied (e.g., three or less thresholds, or five or more thresholds). Depending on examples, a host of the neural network apparatus or a hardware accelerator of the neural network apparatus may determine a threshold. For example, in the case of a learned weight as the input data, the host of the neural network apparatus may determine a threshold for a weight and the hardware accelerator of the neural network apparatus may receive the determined threshold from the host. Also, in the case of an input feature map as the input data, the hardware accelerator of the neural network apparatus may determine a threshold for the input feature map.

The distribution of input data may refer to a weight distribution of the trained artificial neural network for the weight and/or may refer to a distribution of sampled input sets for the input feature map.

The neural network apparatus may determine thresholds corresponding to the weight and the input feature map using a brute-force algorithm. The neural network apparatus may calculate an amount of computation and an accuracy of computation for each of all the threshold combinations and may determine a threshold combination that meets a predetermined criterion.

In detail, for each of all the threshold combinations, the neural network apparatus may determine a combination of candidate thresholds with an average value-wise error less than a pre-defined maximum average value-wise error and a lowest computational complexity using the brute-force algorithm. Here, a method of determining a threshold may, without being limited to the aforementioned examples, include any algorithm capable of determining a threshold combination that may maximize a value obtained by dividing an accuracy of computation by an amount of computation.

The neural network apparatus may determine a threshold and then divide the distribution of input data into a plurality of areas based on the determined threshold, and may allocate a bit-width corresponding to each area to the mantissa of the input data. For example, the neural network apparatus may dynamically allocate 10 bits, 8 bits, and 4 bits to mantissa of corresponding data based on an exponent size of the input data.

In detail, when an exponent of input data corresponds to ***-th_{s_left}** < **x** < **th***_{***s***_***right***} that is a first area 510, the neural network apparatus may allocate 4 bits to the mantissa of the input data. When the exponent of input data corresponds to ***-th_{mleft}** < **x*** ≤ ***-th**_{**s_lef**t}***; *th***_{***s***_*right*} ≤ ***x*** < ***th_{m_right}*** that is a second area 520, the neural network apparatus may allocate 8 bits to the mantissa of the input data. When the exponent of input data corresponds to ***x*** ≤ ***-th_{m_left}*;** ***x*** ≥ ***th_{m_right}*** that is a third area 530, the neural network apparatus may allocate 10 bits to the mantissa of the input data. Although FIG. 5 describes a bit-width allocated to the mantissa as 4 bits, 8 bits, and 10 bits for clarity of description, it is provided as an example only and various bit-widths may be applied. Hereinafter, based on input data expressed as N-bit, a dynamic floating point number with 10 bits allocated to the mantissa may be referred to as DFP N_L, a dynamic floating point number with 8 bits allocated to the mantissa may be referred to as DFP N_M, and a dynamic floating point number with 4 bits allocated to the mantissa may be referred to as DFP N_S. For example, when 4 bits are allocated to the mantissa of input data expressed in 16-bit, corresponding dynamic floating point may be referred to as DFP16_S.

FIG. 6 illustrates an example of describing a method of performing a mantissa multiplication operation of a dynamic floating point number by dynamically adjusting a number of operation cycles using a fixed number of operators.

Referring to FIG. 6, Example 610 refers to a method of performing a mantissa multiplication operation between DFP16_L data (e.g., corresponding to Input A of Example 610) and DFP16_S (e.g., corresponding to Input B of Example 610) data according to a temporal fusion method, and Example 620 refers to a method of performing a mantissa multiplication operation between DFP16_L data (e.g., corresponding to Input A of Example 620) and DFP16_L (e.g., corresponding to Input B of Example 620) data according to the temporal fusion method.

A mixed precision arithmetic module may be the mixed precision arithmetic module 420 of FIG. 4 and may include a 4x4 multiplier, a shifter, and an accumulator. A single set of operators including the 4x4 multiplier, the shifter, and the accumulator may perform the mantissa multiplication operation by operating according to a plurality of cycles.

Referring to Example 620, in the case of performing a mantissa multiplication operation between two pieces of data expressed as 16-bit floating point, 10 bits are fixedly allocated to the mantissa of corresponding input data and 9 cycles are consumed at all times accordingly. In an example, in the case of using input data converted to a dynamic floating point number, performance may be improved by up to nine times. For example, only a single cycle is consumed for an operation between DFP16_S data and DFP16_S data.

For example, referring to Example 610, only 3 cycles may be consumed for the mantissa multiplication operation between DFP16_Ldata and DFP16_S data. In detail, the mixed precision arithmetic module may complete the mantissa multiplication operation between DFP16_L data and DFP16_S data by performing the multiplication operation between lower 4 bits of DFP16_L data and the 4 bits of DFP16_S data in a first cycle, the multiplication operation between intermediate 4 bits of DFP16_L data and the 4 bits of DFP16_S data in a second cycle, and the multiplication operation between upper 2 bits of DFP16_L data and the 4 bits of DFP16_S data in a third cycle.

FIG. 7 illustrates an example of performing a mantissa multiplication operation of a dynamic floating point number by dynamically adjusting a number of operation cycles using a fixed number of operators.

Referring to FIG. 7, Example 710 refers to a method of performing a mantissa multiplication operation between DFP16_L data (e.g., corresponding to input A) and DFP16_S (e.g., corresponding to input B) data using a spatial fusion method.

A mixed precision arithmetic module may be the mixed precision arithmetic module 420 of FIG. 4 and may include a plurality of operators each including a 4x4 multiplier, a shifter, and an accumulator. For example, the mixed precision arithmetic module may include nine operators.

For example, referring to Example 710, in the case of the mantissa multiplication operation between DFP16_L data and DFP16_S data, the nine operators may perform three operations per one cycle. That is, in the corresponding case, the mixed precision arithmetic module may group three operators as a single operator set and may perform an operation on a single piece of DFP16_L data and three pieces of DFP16_S data (first DFP16_S data, second DFP16_S data, and third DFP16_S data) in a single cycle. As a non-limiting example, in FIG. 7, the single cycle may correspond to a row of three multipliers, where the row may perform an operation on a single piece of DFP16_L data and three pieces of DFP16_S data.

In detail, the mixed precision arithmetic module may complete the mantissa multiplication operation between a single piece of DFP16_L data and three pieces of DFP16_S data, for example, first DFP16_S data, second DFP16_S data, and third DFP16_S data, by performing the multiplication operation between DFP16_L data and the first DFP16_S data in a first operator set, the multiplication operation between the DFP16_L data and the second DFP16_S data in a second operator set, and the multiplication operation between the DFP16_L data and the third DFP16_S data in a third operator set.

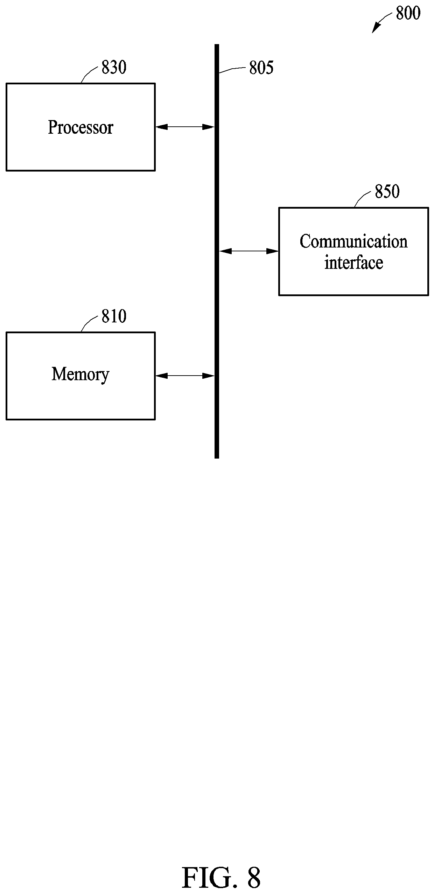

FIG. 8 is a diagram illustrating an example of a calculation apparatus.

Referring to FIG. 8, a calculation apparatus 800 may include a processor 810 (e.g., one or more processors), a memory 830 (e.g., one or more memories), and a communication interface 850. The processor 810, the memory 830, and the communication interface 850 may communicate with each other through a communication bus 805 included in the calculation apparatus 800.

The processor 810 may receive a plurality of pieces of input data expressed as floating point, adjust a bit-width of mantissa of each piece of the input data based on a size of exponent of each piece of the input data, and perform an operation between input data with the adjusted bit-width.

The memory 830 may be a volatile memory or a nonvolatile memory.

In addition, the processor 810 may perform the method described above with reference to FIGS. 1A to 7 or an algorithm corresponding to the method. The processor 810 may run a program and may control the calculation apparatus 800. A program code run by the processor 810 may be stored in the memory 830. The calculation apparatus 800 may be connected to an external device, for example, a personal computer or a network, through an input/output (I/O) device (not shown) and may exchange data. The calculation apparatus 800 may include, be, or be installed in various computing devices and/or systems, such as, for example, a smartphone, a tablet computer, a laptop computer, a desktop computer, a TV, a wearable device, a security system, and a smart home system.

The neural network apparatuses, hosts, memories, HW accelerators, floating point conversion modules, mixed precision arithmetic modules, calculation apparatuses, processors, communication interfaces, communication buses, neural network apparatus 200, host 210, memory 220, HW accelerator 230, floating point conversion module 410, mixed precision arithmetic module 420, calculation apparatus 800, processor 810, memory 830, communication interface 850, communication bus 805, and other apparatuses, devices, units, modules, and components described herein with respect to FIGS. 1-8 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-8 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

## Claims

1. A processor-implemented method, comprising:
receiving (310) a plurality of pieces of input data expressed as floating point;
adjusting (320) a bit-width of mantissa by performing masking on the mantissa of each piece of the input data based on a size of an exponent of each piece of the input data, and for each piece of the input data, the adjusting (320) of the bit-width of the mantissa comprises comparing the piece of the input data to a threshold, and adjusting the bit-width of mantissa based on a result of the comparing, wherein the threshold is determined based on a distribution of the input data and an allowable error range; and
performing (330) an operation between the input data with the adjusted bit-width,
wherein, for each piece of the input data, the adjusting (320) of the bit-width of the mantissa further comprises adjusting the bit-width of the mantissa in proportion to the size of the piece of the input data.

2. The method of claim 1, further comprising:
receiving a distribution of the plurality of pieces of input data; and
determining a threshold corresponding to each of the plurality of pieces of input data based on the distribution of the plurality of pieces of input data.

3. The method of claim 1 or 2, wherein the performing (330) of the operation comprises controlling a position and a timing of an operator to which the input data with the adjusted bit-width is input.

4. The method of one of claims 1 to 3, wherein the performing (330) of the operation comprises:
determining a number of cycles of the operation performed by a preset number of operators based on the adjusted bit-width of each piece of the input data; and
inputting the input data with the adjusted bit-width to the operator based on the determined number of cycles.

5. The method of claim 4, wherein the determining of the number of cycles of the operation comprises determining the number of cycles of the operation based on the adjusted bit-width of the mantissa of each piece of the input data and a number of bits processible by the operator in a single cycle.

6. The method of claim 4, wherein the operator comprises a multiplier configured to perform an integer multiplication of the mantissa of the input data; a shifter configured to shift a result of the multiplier; and an accumulator configured to accumulate the shifted result.

7. The method of one of claims 1 to 6, wherein the performing (330) of the operation comprises:
determining a number of operators for performing the operation within a preset number of cycles of the operation based on the adjusted bit-width of the mantissa of each piece of the input data; and
inputting the input data with the adjusted bit-width to the operator based on the determined number of operators,
wherein the determining of the number of operators comprises determining the number of operators based on the adjusted bit-width of the mantissa of each piece of the input data and a number of bits processible by the operator in a single cycle.

8. An apparatus, comprising:
a central processing device (210) configured to:
receive a distribution of a plurality of pieces of input data expressed as floating point, and
determine a threshold corresponding to each of the plurality of pieces of input data based on the distribution of the plurality of pieces of input data, wherein the threshold is determined based on a distribution of the input data and an allowable error range; and
a hardware accelerator (230) configured to:
receive the plurality of pieces of input data,
adjust a bit-width of mantissa by performing masking on the mantissa of each piece of the input data based on a size of exponent of each piece of the input data, wherein, for each piece of the input data, the hardware accelerator (230) is further configured to adjust the bit-width of the mantissa by comparing the piece of the input data to the threshold, and adjusting the bit-width of mantissa based on a result of the comparing; and
perform an operation between the input data with the adjusted bit-width,
wherein the hardware accelerator (230) is further configured to, for each piece of the input data, adjust the bit-width of the mantissa by adjusting the bit-width of the mantissa in proportion to the size of the piece of the input data.

9. A non-transitory computer-readable storage medium storing instructions that, when executed by one or more processors (830), configure the one or more processors (830) to perform the steps of:
receiving (310) a plurality of pieces of input data expressed as floating point;
adjusting (320) a bit-width of a mantissa by performing masking on the mantissa of each piece of the input data based on a size of an exponent of each piece of the input data by comparing the piece of the input data to a threshold, and adjusting the bit-width of mantissa based on a result of the comparing, wherein the threshold is determined based on a distribution of the input data and an allowable error range; and
performing (330) an operation on the input data with the adjusted bit-width,
wherein the adjusting (320) of the bit-width of the mantissa comprises, for each piece of input data, adjusting the bit-width of the mantissa in proportion to the size of the piece of the input data.

10. The computer-readable storage medium of claim 9, wherein the adjusting of the bit-width of the mantissa comprises allocating a smaller bit-width to the mantissa in response to the exponent being less than the threshold than in response to the exponent being greater than or equal to the threshold.

11. The computer-readable storage medium of claim 9, wherein the adjusting of the bit-width of the mantissa comprises maintaining the bit-width of the mantissa in response to the exponent being greater than or equal to the threshold.

12. The computer-readable storage medium of one of claims 9 to 11, wherein
the performing of the operation (330) comprises using an operator, and
the adjusted bit-width of the mantissa is less than or equal to a number of bits processible by the operator in a single cycle.

13. The computer-readable storage medium of one of claims 9 to 12, wherein
the threshold comprises a plurality of threshold ranges each corresponding to a respective bit-width, and
the adjusting of the bit-width of the mantissa comprises adjusting, in response to the input data corresponding to one of the threshold ranges, the bit-width of the mantissa to be the bit-width corresponding to the one of the threshold ranges.

14. The computer-readable storage medium of one of claims 9 to 13, wherein the performing (330) of the operation comprises performing a multiply and accumulate operation using an operator.

15. The computer-readable storage medium of claim 9, wherein
the step of receiving comprises receiving floating point weight data and floating point feature map data of a layer of a neural network;
the step of adjusting the bit-width of the mantissa of the input data comprises adjusting a mantissa bit-width of the weight data and a mantissa bit-width of the feature map data by respectively comparing a size of an exponent of the weight data to a threshold and a size of an exponent of the feature map data to another threshold; and
the step of performing comprises performing a neural network operation between the floating point weight data and the floating point feature map data with the adjusted bit-widths.

## Patentansprüche

1. Prozessor-implementiertes Verfahren, umfassend:
Empfangen (310) einer Vielzahl von Teilen von Eingabedaten, die als Gleitkomma ausgedrückt sind;
Einstellen (320) einer Bitbreite einer Mantisse durch Durchführen einer Maskierung an der Mantisse jedes Teils der Eingabedaten basierend auf einer Größe eines Exponenten jedes Teils der Eingabedaten, und für jedes Teil der Eingabedaten umfasst das Einstellen (320) der Bitbreite der Mantisse das Vergleichen des Teils der Eingabedaten mit einem Schwellenwert und das Einstellen der Bitbreite der Mantisse basierend auf einem Ergebnis des Vergleichs, wobei der Schwellenwert basierend auf einer Verteilung der Eingabedaten und einem zulässigen Fehlerbereich bestimmt wird; und
Durchführen (330) einer Operation zwischen den Eingabedaten mit der angepassten Bitbreite,
wobei, für jeden Teil der Eingabedaten, das Einstellen (320) der Bitbreite der Mantisse ferner das Einstellen der Bitbreite der Mantisse im Verhältnis zur Größe des Teils der Eingabedaten umfasst.

2. Verfahren nach Anspruch 1, ferner umfassend:
Empfangen einer Verteilung der Vielzahl von Teilen der Eingabedaten; und
Bestimmen eines Schwellenwerts, der jedem der Vielzahl von Teilen von Eingabedaten entspricht, basierend auf der Verteilung der Vielzahl von Teilen von Eingabedaten.

3. Verfahren nach Anspruch 1 oder 2, wobei das Durchführen (330) der Operation das Steuern einer Position und eines Timings eines Operators umfasst, in den die Eingabedaten mit der angepassten Bitbreite eingegeben werden.

4. Verfahren nach einem der Ansprüche 1 bis 3, wobei das Durchführen (330) der Operation umfasst:
Bestimmen einer Anzahl von Zyklen der Operation, die von einer voreingestellten Anzahl von Operatoren durchgeführt werden, basierend auf der angepassten Bitbreite jedes Teils der Eingabedaten; und
Eingeben der Eingabedaten mit der eingestellten Bitbreite an den Operator basierend auf der bestimmten Anzahl von Zyklen.

5. Verfahren nach Anspruch 4, wobei das Bestimmen der Anzahl von Zyklen der Operation das Bestimmen der Anzahl von Zyklen der Operation basierend auf der eingestellten Bitbreite der Mantisse jedes Teils der Eingabedaten und einer Anzahl von Bits, die von dem Operator in einem einzelnen Zyklus verarbeitet werden können, umfasst.

6. Verfahren nach Anspruch 4, wobei der Operator einen Multiplizierer, der konfiguriert ist, um eine ganzzahlige Multiplikation der Mantisse der Eingabedaten durchzuführen; einen Shifter, der konfiguriert ist, um ein Ergebnis des Multiplizierers zu verschieben; und einen Akkumulator, der konfiguriert ist, um das verschobene Ergebnis zu akkumulieren, umfasst.

7. Verfahren nach einem der Ansprüche 1 bis 6, wobei das Durchführen (330) der Operation umfasst:
Bestimmen einer Anzahl von Operatoren zum Durchführen der Operation innerhalb einer voreingestellten Anzahl von Zyklen der Operation basierend auf der eingestellten Bitbreite der Mantisse jedes Teils der Eingabedaten; und
Eingeben der Eingabedaten mit der eingestellten Bitbreite an den Operator basierend auf der bestimmten Anzahl von Operatoren,
wobei das Bestimmen der Anzahl von Operatoren das Bestimmen der Anzahl von Operatoren basierend auf der eingestellten Bitbreite der Mantisse jedes Teils der Eingabedaten und einer Anzahl von Bits, die von dem Operator in einem einzelnen Zyklus verarbeitet werden können, umfasst.

8. Vorrichtung, umfassend:
eine zentrale Verarbeitungsvorrichtung (210) konfiguriert zum:
Empfangen einer Verteilung einer Vielzahl von Teilen von Eingabedaten, die als Gleitkomma ausgedrückt sind, und
Bestimmen eines Schwellenwerts, der jedem der Vielzahl von Teilen von Eingabedaten entspricht, basierend auf der Verteilung der Vielzahl von Teilen von Eingabedaten, wobei der Schwellenwert basierend auf einer Verteilung der Eingabedaten und einem zulässigen Fehlerbereich bestimmt wird; und
einen Hardware-Beschleuniger (230), konfiguriert zum:
Empfangen der Vielzahl von Teilen von Eingabedaten,
Einstellen einer Bitbreite einer Mantisse durch Durchführen einer Maskierung an der Mantisse jedes Teils der Eingabedaten basierend auf einer Größe des Exponenten jedes Teils der Eingabedaten, wobei der Hardware-Beschleuniger (230) für jedes Teil der Eingabedaten weiter konfiguriert ist, um die Bitbreite der Mantisse durch Vergleichen des Teils der Eingabedaten mit dem Schwellenwert einzustellen und die Bitbreite der Mantisse basierend auf einem Ergebnis des Vergleichs einzustellen; und
Durchführen einer Operation zwischen den Eingabedaten mit der eingestellten Bitbreite,
wobei der Hardware-Beschleuniger (230) ferner konfiguriert ist, um für jeden Teil der Eingabedaten die Bitbreite der Mantisse durch Einstellen der Bitbreite der Mantisse im Verhältnis zur Größe des Teils der Eingabedaten einzustellen.

9. Nicht-transitorisches computerlesbares Speichermedium, das Instruktionen speichert, die, wenn sie von einem oder mehreren Prozessoren (830) ausgeführt werden, den einen oder die mehreren Prozessoren (830) konfigurieren, um die Schritte auszuführen:
Empfangen (310) einer Vielzahl von Teilen von Eingabedaten, die als Gleitkomma ausgedrückt sind;
Einstellen (320) einer Bitbreite einer Mantisse durch Durchführen einer Maskierung an der Mantisse jedes Teils der Eingabedaten basierend auf einer Größe eines Exponenten jedes Teils der Eingabedaten durch Vergleichen des Teils der Eingabedaten mit einem Schwellenwert, und Einstellen der Bitbreite der Mantisse basierend auf einem Ergebnis des Vergleichs, wobei der Schwellenwert basierend auf einer Verteilung der Eingabedaten und einem zulässigen Fehlerbereich bestimmt wird; und
Durchführen (330) einer Operation an den Eingabedaten mit der eingestellten Bitbreite,
wobei das Einstellen (320) der Bitbreite der Mantisse für jeden Teil der Eingabedaten das Einstellen der Bitbreite der Mantisse im Verhältnis zu der Größe des Teils der Eingabedaten umfasst.

10. Computerlesbares Speichermedium nach Anspruch 9, wobei das Einstellen der Bitbreite der Mantisse das Zuweisen einer kleineren Bitbreite an die Mantisse umfasst, in Reaktion darauf, dass der Exponent kleiner als der Schwellenwert ist, als, in Reaktion darauf, dass der Exponent größer als oder gleich dem Schwellenwert ist.

11. Computerlesbares Speichermedium nach Anspruch 9, wobei das Einstellen der Bitbreite der Mantisse das Beibehalten der Bitbreite der Mantisse in Reaktion darauf umfasst, dass der Exponent größer oder gleich dem Schwellenwert ist.

12. Computerlesbares Speichermedium nach einem der Ansprüche 9 bis 11, wobei
das Durchführen der Operation (330) die Verwendung eines Operators umfasst, und
die eingestellte Bitbreite der Mantisse kleiner oder gleich einer Anzahl von Bits ist, die von dem Operator in einem einzelnen Zyklus verarbeitet werden kann.

13. Computerlesbares Speichermedium nach einem der Ansprüche 9 bis 12, wobei
der Schwellenwert eine Vielzahl von Schwellenwertbereichen umfasst, die jeweils einer entsprechenden Bitbreite entsprechen, und
das Einstellen der Bitbreite der Mantisse das Einstellen der Bitbreite der Mantisse in Reaktion auf die Eingabedaten, die einem der Schwellenwertbereiche entsprechen, umfasst, um die Bitbreite zu sein, die dem einen der Schwellenwertbereiche entspricht.

14. Computerlesbares Speichermedium nach einem der Ansprüche 9 bis 13, wobei das Durchführen (330) der Operation das Durchführen einer Multiplikations- und Akkumulationsoperation unter Verwendung eines Operators umfasst.

15. Computerlesbares Speichermedium nach Anspruch 9, wobei
der Schritt des Empfangens das Empfangen von Gleitkomma-Gewichtungsdaten und Gleitkomma-Feature-Map-Daten einer Schicht eines neuronalen Netzes umfasst;
der Schritt des Einstellens der Bitbreite der Mantisse der Eingabedaten das Einstellen einer Mantissenbitbreite der Gewichtungsdaten und einer Mantissenbitbreite der Feature-Map-Daten durch jeweiliges Vergleichen einer Größe eines Exponenten der Gewichtungsdaten mit einem Schwellenwert und einer Größe eines Exponenten der Feature-Map-Daten mit einem anderen Schwellenwert umfasst; und
der Schritt des Durchführens das Durchführen einer neuronalen Netzwerkoperation zwischen den Gleitkomma-Gewichtungsdaten und den Gleitkomma-Feature-Map-Daten mit den eingestellten Bitbreiten umfasst.

## Revendications

1. Procédé mis en œuvre par un processeur, comprenant :
une réception (310) d'une pluralité d'éléments de données d'entrée exprimés sous forme de virgule flottante ;
un ajustement (320) d'une largeur de bits de mantisse en appliquant un masquage à la mantisse de chaque élément des données d'entrée selon une taille d'un exposant de chaque élément de données d'entrée, et pour chaque élément des données d'entrée, l'ajustement (320) de la largeur de bits de la mantisse comprend une comparaison de l'élément des données d'entrée à un seuil, et un ajustement de la largeur de bits de mantisse selon un résultat de la comparaison, dans lequel le seuil est déterminé selon une distribution des données d'entrée et une plage d'erreur acceptable ; et
une exécution (330) d'une opération entre les données d'entrée avec la largeur de bits ajustée,
dans lequel, pour chaque élément des données d'entrée, l'ajustement (320) de la largeur de bits de la mantisse comprend en outre un ajustement de la largeur de bits de la mantisse en proportion de la taille de l'élément des données d'entrée.

2. Le procédé de la revendication 1, comprenant en outre :
une réception d'une distribution de la pluralité d'éléments de données d'entrée ; et
une détermination d'un seuil correspondant à chacun de la pluralité d'éléments de données d'entrée selon la distribution de la pluralité d'éléments de données d'entrée.

3. Le procédé de la revendication 1 ou 2, dans lequel l'exécution (330) de l'opération comprend un contrôle d'une position et d'un minutage d'un opérateur vers lequel les données d'entrée avec la largeur de bits ajustée sont entrées.

4. Le procédé de l'une des revendications 1 à 3, dans lequel l'exécution (330) de l'opération comprend :
une détermination d'un nombre de cycles de l'opération exécutée par un nombre prédéfini d'opérateurs selon la largeur de bits ajustée de chaque élément des données d'entrée ; et
une entrée des données d'entrée avec la largeur de bits ajustée vers l'opérateur selon le nombre déterminé de cycles.

5. Le procédé de la revendication 4, dans lequel la détermination du nombre de cycles de l'opération comprend une détermination du nombre de cycles de l'opération selon la largeur de bits ajustée de la mantisse de chaque élément des données d'entrée et un nombre de bits traitables par l'opérateur dans un cycle unique.

6. Le procédé de la revendication 4, dans lequel l'opérateur comprend un multiplicateur configuré pour exécuter une multiplication d'entiers de la mantisse des données d'entrée ; un décaleur configuré pour décaler un résultat du multiplicateur ; et un accumulateur configuré pour accumuler le résultat décalé.

7. Le procédé de l'une des revendications 1 à 6, dans lequel une exécution (330) de l'opération comprend :
une détermination d'un nombre d'opérateurs pour exécuter l'opération au sein d'un nombre prédéfini de cycles de l'opération selon la largeur de bits ajustée de la mantisse de chaque élément des données d'entrée ; et
une entrée des données d'entrée avec la largeur de bits ajustée vers l'opérateur selon le nombre déterminé d'opérateurs,
dans lequel la détermination du nombre d'opérateurs comprend une détermination du nombre d'opérateurs selon la largeur de bits ajustée de la mantisse de chaque élément des données d'entrée et un nombre de bits traitables par l'opérateur dans un cycle unique.

8. Appareil, comprenant :
un dispositif de traitement central (210) configuré pour :
recevoir une distribution d'une pluralité d'éléments de données d'entrée exprimés sous forme de virgule flottante, et
déterminer un seuil correspondant à chacun de la pluralité d'éléments de données d'entrée selon la distribution de la pluralité d'éléments de données d'entrée, dans lequel le seuil est déterminé selon une distribution des données d'entrée et une plage d'erreur acceptable ; et
un accélérateur matériel (230) configuré pour :
recevoir la pluralité d'éléments de données d'entrée,
ajuster une largeur de bits de mantisse en appliquant un masquage à la mantisse de chaque élément des données d'entrée selon une taille d'un exposant de chaque élément de données d'entrée, dans lequel, pour chaque élément des données d'entrée, l'accélérateur matériel (230) est configuré en outre pour ajuster la largeur de bits de la mantisse en comparant l'élément des données d'entrée à un seuil, et ajuster la largeur de bits de mantisse selon un résultat de la comparaison ; et
exécuter une opération entre les données d'entrée avec la largeur de bits ajustée,
dans lequel, l'accélérateur matériel (230) est configuré en outre pour, pour chaque élément des données d'entrée, ajuster la largeur de bits de la mantisse en ajustant la largeur de bits de la mantisse en proportion de la taille de l'élément des données d'entrée.

9. Support de stockage non transitoire lisible par un ordinateur stockant des instructions qui, lorsqu'exécutées par un ou plusieurs processeurs (830), configurent l'un ou plusieurs processeurs (830) pour exécuter les étapes de :
une réception (310) d'une pluralité d'éléments de données d'entrée exprimés sous forme de virgule flottante ;
un ajustement (320) d'une largeur de bits de mantisse en appliquant un masquage à la mantisse de chaque élément des données d'entrée selon une taille d'un exposant de chaque élément des données d'entré en comparant l'élément des données d'entrées à un seuil, et un ajustement de la largeur de bits de mantisse selon un résultat de la comparaison, dans lequel le seuil est déterminé selon une distribution des données d'entrée et une plage d'erreur acceptable ; et
une exécution (330) d'une opération sur les données d'entrée avec la largeur de bits ajustée,
dans lequel, l'ajustement (320) de la largeur de bits de la mantisse comprend, pour chaque élément de données d'entrée, un ajustement de la largeur de bits de la mantisse en proportion de la taille de l'élément des données d'entrée.

10. Le support de stockage lisible par un ordinateur de la revendication 9, dans lequel l'ajustement de la largeur de bits de la mantisse comprend une allocation d'une largeur de bits plus petite à la mantisse en réaction à l'exposant inférieur au seuil plutôt qu'en réaction à l'exposant supérieur ou égal au seuil.

11. Le support de stockage lisible par un ordinateur de la revendication 9, dans lequel l'ajustement de la largeur de bits de la mantisse comprend un maintien de la largeur de bits de la mantisse en réaction à l'exposant supérieur ou égal au seuil.

12. Le support de stockage lisible par un ordinateur de l'une des revendications 9 à 11, dans lequel
l'exécution de l'opération (330) comprend une utilisation d'un opérateur, et
la largeur de bits ajustée de la mantisse est inférieure ou égale à un nombre de bits traitables par l'opérateur dans un cycle unique.

13. Le support de stockage lisible par un ordinateur de l'une des revendications 9 à 12, dans lequel
le seuil comprend une pluralité de plages de seuil, chacune correspondant à une largeur de bits respective, et
l'ajustement de la largeur de bits de la mantisse comprend un ajustement, en réaction aux données d'entrée correspondant à une des plages de seuil, de la largeur de bits de la mantisse pour être la largeur de bits correspondant à l'une des plages de seuil.

14. Le support de stockage lisible par un ordinateur de l'une des revendications 9 à 13, dans lequel l'exécution (330) de l'opération comprend une exécution d'une opération multiplier et accumuler au moyen d'un opérateur.

15. Le support de stockage lisible par un ordinateur de la revendication 9 comprenant en outre : dans lequel
l'étape de réception comprend une réception de données de poids décimal et de données de mappage de caractéristique décimale d'une couche d'un réseau neuronal ;
l'étape d'ajustement de la largeur de bits de la mantisse des données d'entrée comprend un ajustement d'une largeur de bits de mantisse des données de poids et d'une largeur de bits de mantisse des données de mappage de caractéristique en comparant respectivement une taille d'un exposant des données de poids à un seuil, et une taille d'un exposant des données de mappage de caractéristique à un autre seuil ; et
l'étape d'exécution comprend une exécution d'une opération de réseau neuronal entre les données de poids décimal et les données de mappage de caractéristique décimale avec les largeurs de bits ajustées.
